(19) Europäisches Patentamt
European Patent Office
Office européen des brevets

(11) Veröffentlichungsnummer: **0 458 151 A1**

# (12) EUROPÄISCHE PATENTANMELDUNG

(21) Anmeldenummer: **91107666.9**

(51) Int. Cl.[5]: **C07F 7/12**, C08F 4/00

(22) Anmeldetag: **11.05.91**

(30) Priorität: **24.05.90 DE 4016714**

(43) Veröffentlichungstag der Anmeldung:
**27.11.91 Patentblatt 91/48**

(84) Benannte Vertragsstaaten:
**DE GB NL**

(71) Anmelder: **BAYER AG**

**W-5090 Leverkusen 1 Bayerwerk(DE)**

(72) Erfinder: **Bielefeldt, Dietmar, Dr.**
**Beuthener Strasse 13**
**W-4030 Ratingen 6(DE)**
Erfinder: **Piejko, Karl-Erwin, Dr.**
**Unterscheider Weg 7a**
**W-5060 Bergisch Gladbach 2(DE)**

## (54) Bis-amino-trifluormethylsulfoniumdifluortrimethylsilikate.

(57) Neue Bis-amino-trifluormethylsulfonium-difluor-trimethylsilikate der Formel

$$(R^1R^2N)(R^1R^2N)\underset{\displaystyle CF_3}{\underset{|}{S^{\oplus}}}\ (CH_3)_3SiF_2^{\ominus}\ ,$$

die als Katalysatoren für die Polymerisation verwendet werden können, werden hergestellt, indem man zunächst Bis-trifluormethyldisulfid mit elementarem Fluor zu Trifluormethylschwefeltrifluorid und dieses dann mit einem Trimethylsilylamin umsetzt.

EP 0 458 151 A1

Die vorliegende Erfindung betrifft neue Bis-amino-trifluormethylsulfonium-difluortrimethylsilikate, ein Verfahren zu deren Herstellung und deren Verwendung als Polymerisationskatalysatoren.

Es sind bereits Tris-aminosulfoniumsalze bekannt, beispielsweise solche der Formel (I)

$(RRN)(RRN)(RRN)\ S^{\oplus}\ S^{\ominus}$ (I),

in der

R jeweils für einen Alkyl- oder Cycloalkylrest steht oder je zwei Reste R zusammen mit dem dazugehörenden Stickstoffatom eine Pyrrolidin- oder Piperidingruppe bilden und

X für $(CH_3)_3SiF_2$, $HF_2$ oder $CF(R_f)_2O$ mit $R_f$ = einem perfluorierten organischen Rest steht (siehe US-PS 3 940 402, EP-PS 121 439 und EP-OS 164 124).

Verbindungen der Formel (I) mit X = $(CH_3)_3SiF_2$ können hergestellt werden, indem man $SF_4$ mit einer Verbindung des Typs RRN-$Si(CH_3)_3$ umsetzt. Dabei werden sämtliche im $SF_4$ am Schwefelatom befindliche Substituenten abgespalten (siehe US-PS 3 940 402, Anspruch 25).

Verbindungen der Formel (I) mit X = $HF_2$ werden aus solchen mit X = $(CH_3)_3SiF_2$ durch Hydrolyse, Methanolyse oder Pyrolyse hergestellt (siehe EP-PS 121 439, Ansprüche 3, 7 und 8).

Verbindungen der Formel (I) mit X = $CF(R_f)_2O$ sind zugänglich aus solchen mit X = $(CH_3)_3SiF_2$ durch Umsetzung mit perfluorierten Carbonyl- oder Epoxyverbindungen (siehe EP-OS 164 124, Anspruch 2).

Es ist ferner bekannt, daß man Verbindungen der Formel (I) als Polymerisationskatalysatoren, insbesondere zur Herstellung von Polymethylmethacrylaten verwenden kann. Nachteilig hierbei ist, daß sich die Verbindungen der Formel (I) nicht immer gut in Polymerisationsansätzen lösen und häufig über längere Zeit in ihrer katalytischen Wirkung schwanken. Außerdem müssen bei der Herstellung von Verbindungen der Formel (I) z.T. extrem toxische Stoffe, z.B. perfluorierte Carbonyl- und Epoxyverbindungen - siehe Chemiker Zeitung 100, 12 (1976) gehandhabt werden.

Es wurden nun Bis-amino-trifluormethylsulfonium-difluortrimethylsilikate der Formel (II) gefunden

$$(R^1R^2N)(R^1R^2N)\underset{\displaystyle CF_3}{\underset{|}{S^{\oplus}}}\ (CH_3)_3SiF_2^{\ominus} \qquad (II),$$

in der

$R^1$ und $R^2$ jeweils einen $C_1$- bis $C_{20}$-Alkylrest oder $R^1$ + $R^2$ gemeinsam $-(CH_2)_4$-oder $-(CH_2)_5$-bedeuten.

Bevorzugt sind Verbindungen der Formel (II), in der $R^1$ und $R^2$ jeweils für einen $C_1$- bis $C_5$-Alkylrest oder $R^1$ + $R^2$ gemeinsam für $-(CH_2)_4$- oder $-(CH_2)_5$-stehen.

Besonders bevorzugte Verbindungen der Formel (II) sind Bis-dimethylamino-trifluormethylsulfonium-difluortrimethylsilikat (Formel (II), $R^1$ und $R^2$ = Methyl), Bis-diethylamino-trifluormethylsulfonium-difluortrimethylsilikat (Formel (II), $R^1$ und $R^2$ = Ethyl) und Bis-piperidino-trifluormethylsulfonium-difluortrimethylsilikat (Formel (II), $R^1R^2N$ jeweils Piperidino).

Die vorliegende Erfindung betrifft weiterhin ein Verfahren zur Herstellung von Bis-amino-trifluormethylsulfonium-difluortrimethylsilikatender Formel (II), das dadurch gekennzeichnet ist, daß man zunächst Bis-trifluormethyl-disulfid mit elementarem Fluor zu Trifluormethylschwefeltrifluorid und dieses dann mit einem Trimethylsilylamin der Formel (III) umsetzt

$R^1R^2N$-$Si(CH_3)_3$ (III),

in der

$R^1$ und $R^2$ die bei Formel (II) angegebene Bedeutung haben.

Das erfindungsgemäße Verfahren kann durch folgendes Formelschema illustriert werden:

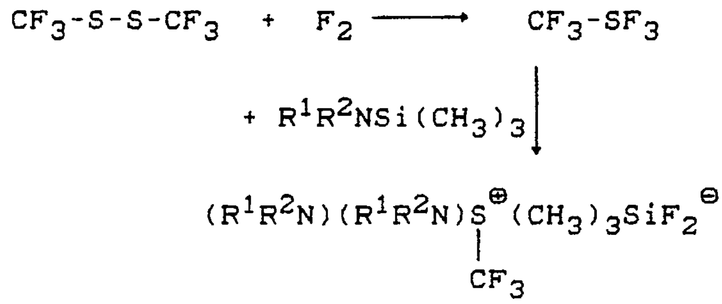

Die Umsetzung von Bis-trifluormethyl-disulfid mit elementarem Fluor kann man beispielsweise bei Temperaturen zwischen +20 und -100 °C durchführen. Das elementare Fluor wird dabei vorzugsweise verdünnt mit einem Inertgas eingesetzt, beispielsweise verdünnt mit Stickstoff oder einem Edelgas. Die Reaktion kann in Anwesenheit oder Abwesenheit von Lösungsmitteln durchgeführt werden. Als Lösungsmittel sind beispielsweise Trichlorfluormethan, Dichlordifluormethan, Trichlortrifluorethan, Acetonitril und beliebige Gemische davon geeignet. Nach Beendigung kann man das Reaktionsgemisch nach an sich bekannten Methoden auftrennen, so Trifluormethylschwefeltrifluorid in für die weitere Umsetzung geeigneter Form erhalten und nicht umgesetztes Bis-trifluormethyl-disulfid in die Umsetzung mit elementarem Fluor zurückführen.

Die Umsetzung von Trifluormethylschwefeltrifluorid mit einem Trimethylsilylamin der Formel (III) führt man vorzugsweise in einem weitestgehend feuchtigkeitsfreien Medium durch. Dies kann man beispielsweise realisieren, indem man getrocknete Lösungsmittel anwendet und die eingesetzten Apparaturen unter trockenem Stickstoff betreibt. Als Lösungsmittel kommen solche beliebiger Art in Frage, die bei den auftretenden Temperaturen flüssig und ausreichend inert sind. Geeignet sind beispielsweise Ether, wie Dimethylether, Diethylether, Methylethylether, Di-n-propylether, Diisopropylether, Methyl-n-butylether, Di-n-amylether, Dioxan und Tetrahydrofuran. Sofern das verwendete Lösungsmittel bei Normaldruck einen Siedepunkt unterhalb der Raumtemperatur aufweist ist es angezeigt in geschlossenen, druckfesten Gefäßen zu arbeiten.

Trimethylsilylamine der Formel (III) sind bekannte und gut zugängliche Verbindungen.

Bezogen auf 1 Mol Trifluormethyl-schwefeltrifluorid kann man beispielsweise 2 bis 10 Mol Trimethylsilylamin der Formel (III) einsetzen. Vorzugsweise beträgt diese Menge 3 bis 5 Mol.

Das erfindungsgemäße Verfahren kann beispielsweise bei Temperaturen zwischen +25 und -100 °C durchgeführt werden. Beispielsweise kann man so verfahren, daß man die Reaktion zum größten Teil bei Temperaturen zwischen -20 und -100 °C durchführt und abschließend Temperaturen im Bereich -10 bis +25 °C anwendet. Bevorzugt führt man die Reaktion zwischen -50 bis -80 °C durch und läßt dann das Reaktionsgemisch sich auf Raumtemperatur erwärmen.

Das so hergestellte Bis-amino-trifluormethylsulfonium-difluortrimethylsilikat der Formel (II) kann aus dem Reaktionsgemisch häufig durch Filtration abgetrennt werden. Das so isolierte Produkt kann man gegebenenfalls mit einem geeigneten Lösungsmittel nachwaschen, beispielsweise mit Petrolether. Teilweise sind die so hergestellten Bis-amino-trifluormethylsulfonium-difluortrimethylsilikate der Formel (II) besser abzutrennen, indem man aus dem Reaktionsgemisch alle flüchtigen Bestandteile abzieht.

Es war nicht zu erwarten, daß bei der erfindungsgemäßen Umsetzung von Trifluormethyl-schwefeltrifluorid der Formel $CF_3SF_3$ mit einem Trimethylsilylamin der Formel (III) die Umsetzung unterschiedlich verläuft, als die bekannte Umsetzung von $SF_4$ mit diesen Trimethylsilylaminen. Bei der erfindungsgemäßen Umsetzung mit $CF_3SF_3$ verbleibt überraschenderweise die $CF_3$-Gruppe am Schwefelatom und es bilden sich Bis-amino-trifluormethyl-sulfoniumsalze, während bei der Umsetzung mit $SF_4$ (siehe US-PS 3 940 402) alle am Schwefel befindlichen Liganden abgespalten werden und sich Tris-aminosulfoniumsalze bilden.

Die vorliegende Erfindung betrifft weiterhin die Verwendung von Bis-amino-trifluormethylsulfonium-difluortrimethylsilikaten der Formel (II) als Katalysatoren für die Polymerisation. Bevorzugt lassen sich damit $\alpha,\beta$-ungesättigte Verbindungen polymerisieren, insbesondere Acrylate und Methacrylate, ganz besonders bevorzugt Methylmethacrylate. Es kann dabei gegebenenfalls zusätzlich ein Initiator eingesetzt werden, z.B. ein 1-Alkoxy-2-alkyl-1-propenyloxy-trimethylsilan. Es ist überraschend, daß sich die Bis-amino-trifluormethylsulfonium-difluortrimethylsilikate der Formel (II) in Polymerisationsansätzen besser lösen als bekannte Silikate der Formel (I) mit X = $(CH_3)_3SiF_2$, und somit die neuen Silikate der Formel (II) universeller einsetzbar sind und über längere Zeit eine gleichmäßige und konstante katalytische Wirkung

entfalten.

Insgesamt betrachtet stellt die vorliegende Erfindung neue Bis-amino-trifluormethylsulfonium-difluortrimethylsilikate zur Verfügung, die auf einfache Weise, in guten Ausbeuten und ohne die Handhabung hochtoxischer Substanzen zugänglich und technisch vorteilhaft im Vergleich zu bekannten Tris-aminosulfoniumsalzen sind.

Beispiele

Beispiel 1

Bei -78° wurden in 425 g (2,1 Mol) Bis-trifluormethyl-disulfid 114 g (3,0 Mol) elementares Fluor mit einer Geschwindigkeit von 0,2 Mol Fluor pro Stunde eingeleitet. Das elementare Fluor wurde als 35 %iges Gemisch mit Helium eingesetzt. Nach dem Ende des Einleitens wurde das Reaktionsgemisch durch Destillation getrennt. Nicht umgesetztes Bis-trifluormethyl-disulfid wurde für weitere Umsätze mit elementarem Fluor verwendet. So wurden 106 g (67,1 % der Theorie) Trifluormethylschwefeltrifluorid mit einem Siedepunkt von 0° C erhalten.

Beispiel 2

63,0 g (0,4 Mol) Trifluormethylschwefeltrifluorid wurden in 250 ml trockenem Diethylether gelöst und dann bei -78° C 155 g (1,33 Mol) Trimethylsilyldimethylamin zugetropft. Nach dem Ende der Zugabe wurde das Reaktionsgemisch langsam auf 20° C erwärmt und bei dieser Temperatur 72 Stunden nachgerührt. Die im Reaktionsgemisch vorhandenen festen Anteile wurden unter Stickstoff in einer evakuierbaren Fritte abgesaugt und mit 200 ml Petrolether nachgewaschen. So wurden 50 g (42 % der Theorie) Bis-dimethylamino-trifluormethylsulfonium-difluortrimethylsilikat mit einem Schmelzpunkt von 130 bis 142° C erhalten. Das $^{19}F$-NMR-Spektrum zeigte charakteristische Banden bei $\delta$ = -22,2 und -138 ppm auf, gemessen gegen Trifluoressigsäure als externen Standard.

Beispiel 3

Zu einer Lösung von 32 g (0,2 Mol) Trifluormethylschwefeltrifluorid in 250 ml trockenem Diethylether wurden bei -78° 102 g (0,7 Mol) Trimethylsilyldiethylamin zugetropft. Das Reaktionsgemisch wurde innerhalb von 16 Stunden auf 20° C erwärmt und bei dieser Temperatur noch 2 Stunden nachgerührt. Danach wurden die festen Bestandteile des Reaktionsgemischs unter trockenem Stickstoff mit einer evakuierbaren Fritte abgesaugt und 2 mal mit je 100 ml Petrolether gewaschen. So wurden 45 g (68 % der Theorie) Bis-diethylamino-trifluormethylsulfonium-difluortrimethylsilikat erhalten. Das $^{1}H$-NMR-Spektrum wies charakteristische Banden bei $\delta$ = -0,1 ppm, +1,25 ppm und +3,3 ppm auf, gemessen in $CD_3CN$ gegen Tetramethylsilan als externen Standard. Das $^{19}F$-NMR-Spektrum zeigte charakteristische Banden bei $\delta$ = -21 ppm und -138 ppm, gemessen gegen Trifluoressigsäure als externen Standard.

Beispiel 4

Zu einer Lösung aus 32 g (0,2 Mol) Trifluormethylschwefeltrifluorid in 250 ml trockenem Diethylether wurden bei -78° C 110 g (0,7 Mol) Trimethylsilylpiperidin zugetropft. Das Gemisch wurde innerhalb von 16 Stunden auf 20° C erwärmt und anschließend noch 2 Tage bei dieser Temperatur nachgerührt. Danach wurden die flüchtigen Bestandteile des Reaktionsgemisches abgezogen, wobei als öliges Produkt 58 g (78 % der Theorie) Bis-piperidino-trifluormethylsulfonium-difluortrimethylsilikat hinterblieben. Das $^{19}F$-NMR-Spektrum zeigte charakteristische Banden bei $\delta$ = -24 ppm und -142 ppm gemessen gegen Trifluoressigsäure als externen Standard.

Beispiel 5

2,5 mmol 1-Methoxy-2-methyl-1-propenyloxy-trimethylsilan (Initiator), 0,125 mmol des gemäß Beispiel 2 erhaltenen Bis-methylamino-trifluormethylsulfonium-difluortrimethylsilikats und 10 ml trockenes Tetrahydrofuran wurden vermischt und dazu 5 ml Methylmethacrylat innerhalb von 30 Minuten bei 20° C zugetropft. Das Gemisch wurde 60 Minuten bei 20° C nachgerührt und dann durch Zusatz von 1 ml Methanol desaktiviert, Nach dem Entfernen des Lösungsmittels wurden 5,2 g Polymethylmethacrylat mit einer geringen Polydispersität (= engen Molmassenverteilung) erhalten. An dem so erhaltenen Polymeren wurde

$M_n$ zu 2,7 kg/Mol und

$$\frac{M_w}{M_n} \text{ zu } 1{,}06 \text{ bestimmt.}$$

**Patentansprüche**

1. Bis-amino-trifluormethylsulfonium-difluortrimethylsilikate der Formel

$$(R^1R^2N)(R^1R^2N)\underset{\displaystyle CF_3}{\underset{|}{S^{\oplus}}}\ (CH_3)_3SiF_2^{\ominus} \qquad (II),$$

   in der
   $R^1$ und $R^2$ jeweils einen $C_1$- bis $C_{20}$-Alkylrest oder $R^1$ + $R^2$ gemeinsam $-(CH_2)_4-$oder $-(CH_2)_5-$ bedeuten.

2. Silikate gemäß Anspruch 1, dadurch gekennzeichnet, daß in Formel (II) $R^1$ und $R^2$ jeweils für einen $C_1$- bis $C_5$-Alkylrest oder $R^1$ + $R^2$ gemeinsam $-(CH_2)_4-$oder $-(CH_2)_5-$bedeuten.

3. Silikate gemäß Ansprüchen 1 und 2, dadurch gekennzeichnet, daß es sich um Bis-dimethylamino-trifluormethylsulfonium-difluortrimethylsilikat, Bis-diethylamino-trifluormethylsulfonium-difluortrimethylsilikat oder Bis-piperidino-trifluormethylsulfonium-difluortrimethylsilikat handelt.

4. Verfahren zur Herstellung von Bis-amino-trifluormethylsulfonium-difluortrimethylsilikaten gemäß Anspruch 1, dadurch gekennzeichnet, daß man zunächst Bis-trifluormethyl-bisulfid mit elementarem Fluor zu Trifluormethylschwefeltrifluorid und dieses dann mit einem Trimethylsilylamin der Formel (III) umsetzt

   $R^1R^2N-Si(CH_3)_3$ (III),

   in der
   $R^1$ und $R^2$ die in Anspruch 1 angegebene Bedeutung haben.

5. Verfahren nach Anspruch 4, dadurch gekennzeichnet, daß man die erste Stufe bei Temperaturen zwischen +20 und -100 °C durchführt und das elementare Fluor verdünnt mit Inertgas einsetzt.

6. Verfahren nach Ansprüchen 4 und 5, dadurch gekennzeichnet, daß man die Umsetzung mit dem Trimethylsilylamin in Gegenwart eines getrockneten Lösungsmittels durchführt und die eingesetzten Apparaturen unter trockenem Stickstoff betreibt.

7. Verfahren nach Ansprüchen 4 bis 6, dadurch gekennzeichnet, daß man Ether als Lösungsmittel einsetzt.

8. Verfahren nach Ansprüchen 4 bis 7, dadurch gekennzeichnet, daß man auf 1 Mol Trifluormethylschwefeltrifluorid 2 bis 10 Mol eines Trimethylsilylamins der Formel (III) einsetzt.

9. Verfahren nach Ansprüchen 4 bis 8, dadurch gekennzeichnet, daß man die Umsetzung mit dem Trimethylsilylamin der Formel (III) bei Temperaturen von -20 bis -100 °C durchführt und anschließend auf Temperaturen von -10 bis +25 °C erwärmt.

10. Verwendung von Bis-amino-trifluormethylsulfonium-difluortrimethylsilikaten des Anspruchs 1 als Kataly-

satoren für die Polymerisation.

Europäisches Patentamt

# EUROPÄISCHER RECHERCHENBERICHT

Nummer der Anmeldung

EP 91 10 7666

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | US-A-3 940 402 (W.J. MIDDLETON)<br>* Insgesamt *<br>– – – – – | 1-10 | C 07 F 7/12<br>C 08 F 4/00 |
| | | | **RECHERCHIERTE SACHGEBIETE (Int. Cl.5)** |
| | | | C 07 F 7/00 |

Der vorliegende Recherchenbericht wurde für alle Patentansprüche erstellt

| Recherchenort | Abschlußdatum der Recherche | Prüfer |
|---|---|---|
| Den Haag | 26 August 91 | RINKEL L.J. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument